# EUROPÄISCHE PATENTSCHRIFT

(11) **EP 3 208 086 B1**
(45) Veröffentlichungstag und Bekanntmachung des Hinweises auf die Patenterteilung: **10.10.2018**
(21) Anmeldenummer: 16156473.7
(22) Anmeldetag: 19.02.2016
(51) Int. Cl.: B32B 21/02, B32B 21/10, B32B 21/12

(54) **LAMINIERTE HOLZ-KUNSTSTOFF-VERBUNDWERKSTOFF (WPC)-PLATTE, UND VERFAHREN ZU DEREN HERSTELLUNG**
LAMINATED WOOD-PLASTIC COMPOSITE MATERIAL (WPC) DISC, AND METHOD FOR ITS PREPARATION
PANNEAU (WPC) EN MATÉRIAU COMPOSITE PLASTIQUE/BOIS STRATIFIÉ ET SON PROCÉDÉ DE FABRICATION

(43) Veröffentlichungstag der Anmeldung: 23.08.2017
(73) Patentinhaber: Flooring Technologies Ltd., Kalkara SCM1001 (MT)
(72) Erfinder: KALWA, Norbert, Dr., 32805 Horn-Bad Meinberg (DE)
(74) Vertreter: Maikowski & Ninnemann Patentanwälte Partnerschaft mbB

(56) Entgegenhaltungen:
- WO-A1-2012/001109
- WO-A1-2012/037950
- WO-A1-2015/060778

## Beschreibung

Die vorliegende Erfindung betrifft eine laminierte Holz-Kunststoff-Verbundwerkstoff-Platte nach Anspruch 1 und ein Verfahren zu deren Herstellung nach Anspruch 11.

### Beschreibung

Neben textilen Bodenbelägen ist die Verwendung von Holzwerkstoffplatten, z.B. in Form von Holzfaserplatten in unterschiedlichen Ausgestaltungen zur Verwendung als Fußbodenlaminat oder zur Verkleidung von Wänden oder auch bei der Herstellung von Möbeln seit langem bekannt. So werden beispielsweise Holzfaserplatten in Form von mitteldichten Holzfaserplatten (MDF-Platten), hochdichten Holzfaserplatten (HDF-Platten), Spanplatten oder OSB-Platten (oriented strand board) verwendet, welche durch Verpressen entsprechender Holzfasern oder Späne mit einem duroplastischen Kunststoffharz als Bindemittel gewonnen werden.

Ein Nachteil in der Verwendung von Bodenbelägen auf der Basis von Holz oder Holzwerkstoffplatten wie Laminatböden oder Fertigparkett besteht in deren Feuchteempfindlichkeit. So reagieren die genannten Holzwerkstoffplatten auf Wasserkontakt schnell mit Quellungen und/oder Dimensionsänderungen, die sich von leichten Kantenquellungen bis hin zu Gefügezerstörungen entwickeln können. Dies wird u.a. durch Einwirkungen von Pflegemitteln auf Wasserbasis hervorgerufen, welche teilweise sehr häufig und sehr intensiv verwendet werden. Auch können hohe Luftfeuchten vergleichbare Prozesse auslösen. Darüber hinaus steht der Bodenbelag typischerweise auch in einem direkten Kontakt mit den Gebäudeteilen wie z.B. Betondecken/Estrich oder Wänden, die ebenfalls Feuchtigkeit in dem Bodenbelag transportieren können. Aus diesem Grund wird bei der Herstellung der oben genannten Holzwerkstoffprodukte auf quellarme Hölzer oder Holzwerkstoffe zurückgegriffen, was zwar die beschriebenen Probleme mindert, aber nicht gänzlich beheben kann. Teilweise kommen auch anorganische Trägerplatten zur Herstellung von Produkten mit Holzoberflächen zum Einsatz, wobei es hier zu Verklebungs-, Bearbeitungs- oder Verlegeproblemen kommen kann.

Aus diesen Gründen hat man in der Vergangenheit häufig sogenannte wood-plasticcomposites (WPC) als Trägermaterialien für Bodenbeläge verwendet. Diese Trägermaterialien besitzen eine sehr geringe Quellung von weniger als 3% und eine hohe Dimensionsstabilität.

WPC's sind thermoplastisch verarbeitbare Verbundwerkstoffe auf der Basis von Holzfasern, Holzmehl oder Holzspänen und thermoplastischen Kunststoffen, welchen ggf. noch weitere Additive zugesetzt werden können. Die Gemische aus Holzpartikeln und Thermoplasten werden aufgeschmolzen und zu Agglomeraten verarbeitet. Im weiteren Herstellungsprozess werden die Agglomerate in Extrudern aufgeschmolzen und daraus relativ kleinformatige Platten hergestellt.

Eine andere Möglichkeit zur Herstellung von WPC besteht darin, Granulat, Pulver- oder Fasergemische auf ein Transportband aufzustreuen und in Durchlaufpressen zu verpressen. Dabei wird ebenfalls der Kunststoffanteil des Gemisches aufgeschmolzen, es erfolgt eine Materialverdichtung und durch Abkühlung eine Fixierung des Aufbaus. Dieser Ansatz ermöglicht die Herstellung von großformatigen WPC-Platten.

Ein Anwendungsbereich derartiger WPC-Platten liegt im Innenbereich, insbesondere der Bereich des Fußbodens, wo es auf eine hohe Stabilität gegenüber Feuchtigkeit und Wasser ankommt. Allerdings werden im Bodenbelagsbereich normalerweise Produkte mit einer dekorierten Oberfläche verwendet. Aus diesem Grund müssen die unifarbenen WPC-Platten bzw. WPC-Elemente dekoriert werden.

Eine Dekorierung von WPC-Platten ist zum Beispiel unter Verwendung von auf die Trägerplatte aufkaschierten Dekorfolien oder dekorativen Finish-Folien oder mit der Trägerplatte verpressten, aminoharzimprägnierten Dekorpapierlagen möglich. Nachteilig hierbei ist der relativ hohe Materialaufwand bedingt durch die Bereitstellung der bedruckten Folien oder Papierlagen.

Als eine mögliche Alternative zur Verwendung von Dekorpapieren und -folien hat sich in der Vergangenheit das direkte Bedrucken von Holzwerkstoffplatten entwickelt, da ein Bedrucken von Papier und dessen nachträgliches Kaschieren oder Direktbeschichten auf die Holzwerkstoffplatte entfällt.

Aus der WO 20015/060778 A1 ist ein Verfahren zur Ausbildung einer dekorativen abriebfesten Schicht auf einem Substrat umfassend ein Polymermaterial bekannt. Dieser Druckschrift ist ein Laminat zu entnehmen mit einem Kernsubstrat aus einem Holzfaser-Kunststoff-Komposit, mit einer auf der Oberseite des Kernsubstrates angeordneten Faserschicht, mit mindestens einem im Direktdruck aufgedrucktem Dekor und einer auf dem Dekor angeordneten Verschleißschutzschicht.

WO 2012/037950 A1 offenbart ein Verfahren zur Herstellung von Paneelen, insbesondere Fußbodenpaneelen, enthaltend verschiedene Schichten u.a. eine Grundierung aus einem flüssigen Harz auf Melaminbasis, ein Primer, ein wasserbasiertes Lack zur Erzeugung eines Dekors und eine Versiegelung.

WO 2012/001109 A1 betrifft ein Paneel aus einer polymerischen Kompositschicht und einer Deckschicht, welche mit der polymerischen Kompositschicht laminiert ist. Die polymerische Kompositschicht ist eine WPC Schicht. Die Deckschicht besteht aus einem polymerischen Film, der mit einer im Digitaldruck aufgetragenen Dekorschicht versehen ist. Der Polymerfilm kann mit einem Haftvermittler und einer ionomerischen Harzschicht als Schutzschicht versehen sein.

Aus der DE 10 2006 040 094 B4 ist z.B. bekannt, Trägerplatten aus einem Biomaterial-Kunststoff-Verbundwerkstoff mit einem Dekorfarbdruck zu versehen. Zu diesem Zweck wird die Trägerplatte zunächst mit einer Grundierung auf einer UV-vernetzbaren Isocyanat-Basis, gefolgt von einer Basisfarbbeschichtung, bevorzugt aus einem UV-Spachtelmaterial, versehen. Zwischen den einzelnen Arbeitsvorgängen erfolgt eine Trocknung unter Verwendung von UV-Licht. Nach dem Bedrucken der so vorbehandelten Trägerplatte wird die bedruckte Oberfläche mit einer Versiegelungsgrundschicht, einem Schleifgrund und einem bevorzugt mehrlagigen Decklack versiegelt. Entsprechend handelt es sich bei diesem Aufbau zur Oberflächenveredlung um einen Lackaufbau aus UV- Lacken, insbesondere aus Isocyanat-basierten UV-Lacken, die drucklos mittels UV-oder auch ESH-Strahlung polymerisiert und ausgehärtet werden. Nachteilig bei der Verwendung von Lacken sind zum einen die relativ hohen Kosten derartiger Lacke und zum anderen ist eine Strukturierung von Lackschichten nicht möglich. Gerade bei der Verwendung im Fußbodenbereich wäre jedoch eine Strukturierung wünschenswert, um z.B. Synchronstrukturen in der Oberfläche der Fußbodenplatten zu erzeugen.

Gleichzeitig ist es wünschenswert, großformatige oberflächenveredelte (bedruckte) WPC-Platten zur Verfügung zu stellen.

Der vorliegenden Erfindung liegt daher die technische Aufgabe zu Grunde, die beschriebenen Nachteile zu beheben, und eine oberflächenveredelte WPC-Platte zur Verfügung zu stellen, die kostengünstig herstellbar ist und gleichzeitig zur Verwendung als Fußbodenplatte geeignet ist.

Entsprechend wird eine laminierte Holz-Kunststoff-Verbundwerkstoff(WPC)-Platte, bereitgestellt, welche die folgenden Merkmale umfasst:
- mindestens eine Trägerplatte aus einem Holzpartikel-Kunststoff-Gemisch,
- mindestens eine auf einer Seite, bevorzugt auf der Oberseite, der Trägerplatte angeordnete Schicht aus mindestens einem lösemittelfreien Trennmittel,
- mindestens einen im Direktdruck aufgedruckten Dekor, und
- mindestens eine auf dem Dekor angeordnete Verschleißschutzschicht,
wobei zwischen der mindestens einen Trennmittelschicht und dem mindestens einem Dekor mindestens eine Grundierungsschicht, wobei die mindestens eine Grundierungsschicht eine Schicht aus einem flüssigen Kunstharz mit einem Feststoffgehalt der wässrigen Kunstharzlösung zwischen 30 und 80% ist, und mindestens eine Deckschicht, wobei die mindestens eine Deckschicht in Form eines Weißgrundes vorliegt, vorgesehen sind.

Es wird demnach eine veredelte Verbundwerkstoff-Platte bereitgestellt, welche aus einer WPC-Trägerplatte, einer Trennmittelschicht (z.B. in Form von Holzfasern), einer im Direktdruck aufgedruckten Dekorschicht und einer Verschleißschutzschicht besteht. Die Dekorschicht und Verschleißschutzschicht liegen (wie unten noch weiter im Detail beschrieben) jeweils als Flüssigschichten vor. Die Schicht aus einem lösemittelfreien Trennmittel ist zum einen durch den Herstellungsprozess (wie ebenfalls noch weiter unten im Detail ausgeführt) bedingt. Zum anderen ermöglicht diese Schicht aus festem Trennmittel eine gute Haftung der nachfolgenden flüssigen Beschichtungen auf der Oberfläche der WPC-Trägerplatte, die aufgrund der Zusammensetzung (hoher Kunststoffgehalt) und Herstellung (Aufschmelzen und Abkühlung) über eine glatte und nur schwer zu beschichtende Oberfläche verfügt. Die Laminierung (d.h. Vernetzung der Flüssigschichten) des Gesamtaufbaus erfolgt durch Pressen bei hohen Temperaturen z.B. in einer Kurztaktpresse. Der Vorteil der vorliegenden Platte besteht aufgrund der Verwendung von flüssigen wärmehärtbaren Veredlungsschichten in den gegenüber Lacken reduzierten Kosten und der Möglichkeit der Strukturierung.

Als Oberseite der Trägerplatte im Sinne der vorliegenden Anmeldung ist die Seite zu verstehen, die bei der späteren Verwendung z.B. als Fußbodenplatte dem Beobachter zugewandt ist. Entsprechend ist die Unterseite der Trägerplatte die Seite, die vom Beobachter abgewandt ist und dem Untergrund zugewandt ist.

Die als Trägerplatte verwendete WPC-Trägerplatte wird in einem mehrstufigen Prozess, insbesondere einem dreistufigen Prozess bereitgestellt, in welchem zunächst aus einem Gemisch von Holzpartikeln, z.B. in Form von Holzfasern, und funktionalisierten Kunststoffen, insbesondere thermoplastischen Kunststoffen, ein vorverdichtetes Vlies bzw. eine Dämpfstoffmatte mit einer niedrigen Rohdichte hergestellt wird. Dieses Vlies bzw. Dämpfstoffmatte mit einer niedrigen Rohdichte wird anschließend zunächst auf einer Doppelbandpresse unter hohem Druck und hoher Temperatur verdichtet und anschließend in einer Kühlpresse abgekühlt. Das vorliegende Verfahren ermöglicht die Herstellung von Holzwerkstoffplatten in Form von Holz-Kunststoff-Verbundwerkstoffen bzw. -Composites (WPCs) in großen Formaten, die als Trägerplatten zur Produktion von Bodenbelägen dienen, verbunden mit einer hohen Produktivität und somit niedrigeren Kosten.

In einer Ausführungsform der vorliegenden WPC-Platte wird zur Herstellung der Trägerplatte ein thermoplastischer Kunststoff, insbesondere in Form von Granulaten, Pulver oder Kunststofffasern in dem Holzpartikel-Kunststoff-Gemisch verwendet.

Der thermoplastische Kunststoff ist bevorzugter Weise ausgewählt aus einer Gruppe enthaltend Polyethylen (PE), Polypropylen (PP), Polyester, Polyethylenterephthalat (PET), Polyamid (PA), Polystyrol (PS), Acrylnitril-Butadien-Styrol (ABS), Polymethylmethacrylat (PMMA), Polycarbonat (PC), Polyetheretherketon (PEEK), Polyisobutylen (PIB), Polybutylen (PB), Mischungen oder Copolymerisate davon. Insbesondere ist es bevorzugt, wenn als thermoplastischer Kunststoff PE, PP oder eine Mischung davon eingesetzt wird.

Wie erwähnt, kann der thermoplastische Kunststoff in Form von Kunststofffasern eingesetzt werden. Die Kunststofffasern können dabei als Monokomponentenfasern oder als Bikomponentenfasern vorliegen. Die thermisch aktivierbaren Kunststoff- bzw. Bindefasern führen in der Matrix aus Holzfasern bzw. Holzpartikel sowohl eine Binde- als auch eine Stützfunktion aus. Werden Monokomponentenfasern verwendet, bestehen diese bevorzugt aus Polyethylen oder anderen thermoplastischen Kunststoffen mit niedrigem Schmelzpunkt.

Bikomponentenfasern (auch als Biko-Stützfasern bezeichnet) werden besonders bevorzugt eingesetzt. Biko-Fasern erhöhen die Steifigkeit von Holzfaserplatten und verringern auch die bei thermoplastischen Kunststoffen (wie z.B. bei PVC) anzutreffende Kriechneigung.

Die Biko-Fasern bestehen typischerweise aus einem Tragfilament oder auch einer Kernfaser aus einem Kunststoff mit höherer Temperaturbeständigkeit, insbesondere Polyester oder Polypropylen, die von einem Kunststoff mit einem niedrigeren Schmelzpunkt, insbesondere aus Polyethylen, umhüllt bzw. ummantelt sind. Die Hülle bzw. der Mantel der Biko-Fasern ermöglicht nach Aufschmelzen bzw. Anschmelzen eine Vernetzung der Holzpartikel miteinander. Vorliegend werden insbesondere als Bikomponentenfasern solche auf der Basis von Thermoplasten wie PP/PE, Polyester/PE oder Polyester/Polyester verwendet.

Es ist ebenfalls vorstellbar, dass der Kunststoffanteil selbst auch ein Gemisch von verschiedenen Kunststoffen ist. So kann ein Kunststoffgemisch aus 20 Gew% Bikomponentenfasern : 80 Gew% PE-Fasern bis zu 80 Gew% Bikomponentenfasern : 20 Gew% PE-Fasern bestehen. Generell sind auch andere Zusammensetzungen möglich. Durch die Veränderung der Zusammensetzung der Kunststoffkomponente kann die zur Verdichtung des Vorvlieses bzw. Vlieses benötigte Temperatur verändert und angepasst werden.

Es kann vorliegend auch mindestens ein Kunststoff verwendet werden, der mit mindestens einer organischen Verbindung funktionalisiert ist. Die organische Verbindung z.B. in Form eines Monomers, ist wiederum bevorzugt mit mindestens einer funktionellen Gruppe versehen, wobei die funktionelle Gruppe in der Lage ist, mindestens eine Bindung, insbesondere eine chemische Bindung, mit den OH-Gruppen der Zellulose, der Hemicellulosen oder des Lignins der Holzpartikel einzugehen. Damit entsteht eine chemische Bindung zwischen dem Kunststoff, insbesondere den Kunststofffasern, und den Holzfasern, wodurch eine Trennung zwischen den beiden Fasertypen durch eindringendes und die damit verbundene Quellung der Holzfasern, Wasser vermieden wird.

Bei der Verbindung handelt es sich um eine organische Verbindung, deren mindestens eine funktionelle Gruppe ausgewählt aus einer Gruppe enthaltend -CO₂H, - CONH₂, -COO-, insbesondere Maleinsäure, Phthalsäure, Bernsteinsäure, Glutarsäure, Adipinsäure oder deren Anhydride, oder Succinimid.

Die monomere organische Verbindung wie z.B. Maleinsäureanhydrid (MSA) wird auf das unpolare Basispolymer wie z.B. Polypropylen oder Polyethylen in einem Grafting-Verfahren aufgepfropft. Hierbei ist es auch möglich, dass die organische Verbindung mehr als ein Monomer umfasst, z.B. in Form eines Dimers oder Trimers, wobei z.B. jeweils zwei funktionalisierte organische Moleküle oder Verbindungen über ein Brückenmolekül z.B. in Form ein nicht-funktionalisiertes Molekül miteinander verbunden sind. Besonders bevorzugt ist in diesem Zusammenhang ein Trimer aus MSA-Styren-MSA.

Der Pfropfgrad des verwendeten Kunststoffs kann zwischen 0,1 und 5 Gew% an monomerer organischer Verbindung, bevorzugt zwischen 0,5 und 3 Gew%, insbesondere bevorzugt zwischen 1 und 2 Gew% betragen.

Ganz besonders bevorzugt werden eine Mischung aus Polypropylen und Polyethylen, insbesondere in Form von Bikomponenten-Fasern bestehend aus einem Polypropylen-Kern und einer Polyethylen-Hülle verwendet, wobei die unpolaren Basispolymere jeweils mit Maleinsäureanhydrid funktionalisiert sind. Auch können die Bikomponenten-Fasern aus Polyethylenterephthalat/ Polyethylenterephthalat-Co-iso-phthalat mit ggf. aufgepfropftem MSA bestehen.

Es ist auch möglich eine Mischung aus einem Anteil an nicht-modifizierten (nicht-funktionalisierten) Bikomponentenfasern (d.h. ohne aufgepfropfter organischer Verbindung) und einem Anteil an mit einer organischen Verbindung funktionalisierten Kunststoff (d.h. mit aufgepfropfter organischer Verbindung) zu verwenden. So ist es denkbar, eine Mischung aus einem Anteil an Polyethylenterephthalat/ Polyethylenterephthalat-Co-iso-phthalat-Fasern und mit Maleinsäueranhydrid gegrafteten Polyethylen (z.B. in Form von LLDPE (linear low-density polyethylene)-Fasern) zu verwenden. In solch einem Fall kann z.B. eine Mischung aus nicht-funktionalisierten Kunststofffasern mit einem Anteil von 0,5 bis 15 Gew%, bevorzugt 3 bis 10 Gew% funktionalisierten Kunststofffasern verwendet werden.

Die Länge der verwendeten Kunststofffasern liegt in einem Bereich zwischen 5 mm und 30 mm, bevorzugt 10 mm und 25 mm, insbesondere bevorzugt zwischen 15 und 20 mm, z.B. zwischen 10 und 24 mm.

In einer weiteren Ausführungsform des vorliegenden Verfahrens wird ein Holzpartikel-Kunststoff-Gemisch verwendet, welches ein Mischungsverhältnis von Holzpartikeln zu Kunststoff (funktionalisiert und/oder nicht-funktionalisiert) zwischen 90 Gew% Holzpartikel : 10 Gew% Kunststoffe und 20 Gew% Holzpartikel : 80 Gew% Kunststoffe, bevorzugt zwischen 70 Gew% Holzpartikel : 30 Gew% Kunststoffe und 40 Gew% Holzpartikel : 60 Gew% Kunststoffe umfasst. Das verwendete Holzpartikel-Kunststoffgemisch kann beispielhaft 44 Gew% Holzfasern bzw. Holzpartikel und 56 Gew% Biko-Fasern, z.B. Polyethylenterephthalat/ Polyethylenterephthalat-Co-Isophthalat-Fasern oder PP/PE-Fasern aufweisen. Ein Mischungsverhältnis von Holzfasern und Kunststofffasern von 50 Gew% zu 50 Gew% ist ganz besonders bevorzugt.

Unter den vorliegend verwendeten Holzpartikeln sind lignocellulosehaltige Zerkleinerungsprodukte wie z.B. Holzfasern, Holzspäne oder auch Holzmehl zu verstehen. Im Falle der Verwendung von Holzfasern kommen insbesondere trockene Holzfasern mit einer Länge von 1,0 mm bis 20 mm, bevorzugt 1,5 mm bis 15 mm, insbesondere bevorzugt 5 und 10 mm und einer Dicke von 0,05 mm bis 1 mm zum Einsatz. Die Holzfaserfeuchte der verwendeten Fasern liegt dabei in einem Bereich zwischen 1 und 15 %, bevorzugt 3 und 12 % bezogen auf das Gesamtgewicht der Holzfasern.

Es ist ebenfalls möglich, die verwendeten Holzpartikel in Bezug auf den mittleren Korndurchmesser zu bestimmen, wobei der mittlere Korndurchmesser d50 zwischen 0,05 mm und 1 mm, bevorzugt 0,1 und 0,8 mm betragen kann.

Das lösemittelfreie Trennmittel liegt als Feststoff, insbesondere als Pulver, Granulat und/oder Fasern, auf der Trägerplatte vor. Das verwendete Trennmittel bildet keine durchgängige glatte oder gleichmäßige Oberflächenschicht aus, sondern eine Oberflächenschicht mit Unregelmäßigkeiten, die eine verbesserte Haftung der nachfolgenden Veredlungsschichten wie Primer- oder Dekorschicht auf der Trägerplatte ermöglichen. Auch verhindert das Trennmittel ein Anhaften oder Ankleben der WPC-Platten an den Stahlbändern der Doppelbandpresse.

Das verwendete Trennmittel liegt bevorzugt als trockener Feststoff vor; d.h. das Trennmittel liegt nicht in Form einer Lösung oder Dispersion vor, und enthält entsprechend kein Wasser oder ein anderes Lösemittel. Insbesondere liegt das mindestens eine Trennmittel in Form eines Pulvers, eines Granulates und/oder Fasern vor.

Das vorliegend zum Einsatz kommende Trennmittel ist bevorzugt ausgewählt aus einer Gruppe enthaltend pflanzliche oder synthetische Feststoffe, insbesondere Holzpartikel, Holzmehl, Holzstaub, Holzfasern, Schleifstaub, gebleichte Cellulosefasern, Kunststofffasern oder Kunstharzgranulate.

Der Einsatz von gebleichten Cellulosefasern birgt dabei mehrere Vorteile. Die gebleichten Cellulosefasern haben eine deutlich höhere Temperaturbeständigkeit als Holzfasern. Damit wird im Prozess eine Braunfärbung, die bei Holzfasern beim Kontakt mit heißen Stahlbändern (T>180°C) auftritt, verhindert. Ein weiterer Vorteil ist, dass die höhere Temperaturbeständigkeit weniger Probleme durch thermische Abbauprozesse (Vercrackung) verursacht. Weiter führt der eher unerwünschte braune Farbton der WPC - je nach Auftragsmenge der gebleichten Cellulosefasern - auch zu einer Einsparung an pigmentierte Grundierung. Ein weiterer Vorteil ist, dass Cellulosefasern - je nach Anwendungsfall - in sehr unterschiedlichen Qualitäten verfügbar sind (Faserlängen, Geometrien). Damit kann den weiteren Veredelungsprozessen besser Rechnung getragen werden. Dies gilt für in einem Refinerprozess hergestellten Holzfasern nicht. Allerdings sind gebleichte Cellulosefasern erheblich teurer als Holzfasern oder Schleifstaub.

Die Verwendung von Holzmehl, Holzstaub, Holzpartikeln oder Holzfasern hat allerdings im Gegensatz zu gebleichten Zellulosefasern als Trennmittel den Vorteil, dass dieses Material bei der Herstellung von Holzfasern in einem Refiner ohnehin anfällt. Dieses Material wird üblicherweise aus dem Herstellungsprozess ausgeschleust. Mit dem vorliegenden Verfahren kann dieses holzhaltige Feinmaterial hingegen nach Aufbereitung/Trocknung wieder in den Prozess eingeschleust werden. Damit wird die Materialeffizienz gesteigert und eine Entsorgung des Materials entfällt. Insbesondere im Falle der Verwendung des holzhaltigen Feinmaterials als Trennmittel wird neben der Trennwirkung zwischen der kunststoffhaltigen Matte bzw. Vlies und dem heißen Pressband in der Doppelbandpresse auch eine Matte bzw. Vlies mit einer zusätzlichen Schicht (aus dem Trennmittel) bereitgestellt, die eine direkt veredelbare Oberfläche darstellt (z.B. Auftragen einer Dekorschicht ohne zusätzliche Bearbeitung der Oberfläche). Demnach kann die Trennmittelschicht auch als eine Multifunktionsschicht bezeichnet werden.

Im Falle der Verwendung von Kunststofffasern oder Kunstharzgranulaten als Trennmittel werden Kunststofffasern oder Kunstharzgranulate aus einem nicht-funktionalisierten Kunststoff, insbesondere ausgewählt aus der Gruppe enthaltend Polyethylen (PE), Polypropylen (PP), Polyester, wie Polyethylenterephthalat, oder Mischungen davon, insbesondere von Polypropylen (PP) und Polyethylen (PE), verwendet. Die Kunststofffasern oder Kunstharzgranulate bestehen entsprechend aus einem nicht-klebenden Kunststoff. Die Länge der als Trennmittel verwendeten Kunststofffasern kann zwischen 10 und 100 mm; bevorzugt zwischen 20 und 70 mm, insbesondere bevorzugt zwischen 30 und 50 mm betragen.

In einer Ausführungsform können PET-Bikofasern als Trennmittel verwendet werden. Diese schmelzen zwar auch an, bilden aber in der Presse mit der Stahlband-Oberfläche keine chemische Bindung aus. Nach dem Abkühlen löst sich die Schicht, die sich aus diesen Fasern an der Oberfläche der Platte gebildet hat, wieder vom Stahlband ab. Allerdings ist hier dann doch eine Vorbehandlung der Oberfläche der verpressten Werkstoffplatte zur Verbesserung der Verankerung einer Grundierung vorteilhaft. Dies kann ein Anschliff sein, der auch nicht festeingebundene Fasern/die Presshaut abnimmt und/oder eine Plasma- oder Coronabehandlung.

Wie oben erwähnt ist erfindungsgemäß zwischen der mindestens einen Trennmittelschicht und dem mindestens einem Dekor mindestens eine Grundierungsschicht in Form einer Schicht aus einem flüssigen Kunstharz, vorgesehen. Das flüssige Kunstharz, bevorzugt ein Aminoplastharz, insbesondere bevorzugt ein Formaldehyd-Harz wie Melamin-Formaldehyd-Harz, Melamin-Harnstoff-Formaldehyd-Harz oder Harnstoff-Formaldehyd-Harz ist in einer Menge zwischen 5 und 50 g/m², bevorzugt zwischen 10 und 40 g/m², insbesondere bevorzugt zwischen 20 und 35 g/m² aufgetragen. Diese Harzschicht wird auch als Walzgrund bezeichnet, und dient der Verbesserung der Haftung der nachfolgenden Schichten auf der Trägerplatte.

Der Feststoffgehalt der wässrigen als Grundierungsschicht verwendeten Kunstharzlösung liegt zwischen erfindungsgemäß 30 und 80%, bevorzugt 40 und 60%, insbesondere bevorzugt bei 55%. Das Flüssigharz kann zusätzlich geeignete Netzmittel, Härter, Trennmittel und Entschäumer aufweisen.

Nach Auftragen der wässrigen Harzlösung auf die WPC-Trägerplatte zur Vorbeschichtung bzw. Grundierung derselbigen wird das Flüssigharz auf eine Feuchte von 10%, bevorzugt 6% z.B. in einem Konvektionsofen oder Nahinfrarot-Ofen getrocknet.

Erfindungsgemäß ist zwischen der mindestens einen Trennmittelschicht und dem mindestens einem Dekor mindestens eine Deckschicht, in Form eines Weißgrundes angeordnet. Die Deckschicht umfasst bevorzugt eine Zusammensetzung aus Kasein oder Soja-Protein als Bindemittel und anorganischen Pigmenten, insbesondere anorganischen Farbpigmenten. Als Farbpigmente können weiße Pigmente wie Titandioxid TiO₂ verwendet werden. Weitere Farbpigmente können Calciumcarbonat, Bariumsulfat oder Bariumcarbonat sein. Die Deckschicht enthält neben dem Farbpigmenten wie Titandioxid und Kasein noch Wasser als Lösemittel.

Die weiße Deckschicht wird als Flüssigauftrag in einer Menge zwischen 5 und 50 g/m², bevorzugt zwischen 15 und 40 g/m², insbesondere bevorzugt zwischen 25 und 35 g/m² aufgetragen. Es ist ebenfalls denkbar, dass die Deckschicht wie z.B. Weissgrund aus mindestens einer, bevorzugt aus mindestens zwei, insbesondere bevorzugt aus mindestens vier nacheinander aufgetragenen Lagen bzw. Aufträgen besteht, wobei die Auftragsmenge zwischen den Lagen bzw. Aufträgen gleich oder verschieden ist, d.h. die Auftragsmenge einer jeden einzelnen Lagen kann variieren. Bei der Verwendung von gebleichten Cellulosefasern kann sich diese Menge je nach Auftrag an Fasern bis auf die Hälfte reduzieren.

In einer noch weiteren bevorzugten Variante der vorliegenden WPC-Platte ist zwischen der mindestens einen Trennmittelschicht und dem mindestens einem Dekor mindestens eine Primerschicht angeordnet.

Die Menge des aufgetragenen flüssigen Primers beträgt vorliegend zwischen 1 und 30 g/m², bevorzugt zwischen 5 und 20 g/m², insbesondere bevorzugt zwischen 10 und 15 g/m². Als Primer werden bevorzugt Verbindungen auf Isocyanatbasis, wobei nicht-aromatische, aliphatische Isocyanate, wie Hexamethylendiisocyanat, Isophorondiisocyanat, oder Präpolymere, die diese Isocyanate enthalten besonders bevorzugt sind.

In einer besonders bevorzugten Ausführungsform wird das mindestens eine Dekor mittels Tiefdruck- und/oder Digitaldruckverfahren auf die (oberflächenbehandelte und vorbeschichtete) Trägerplatte aufgebracht. Die vorliegend verwendeten Druckfarben sind bevorzugt wässrige Druckfarben. Die flüssigen, wässrigen Druckfarben werden in einer Menge zwischen 1 und 30 g/m², bevorzugt zwischen 3 und 20 g/m², insbesondere bevorzugt zwischen 3 und 10 g/m² aufgebracht.

Vorteilhafterweise werden als Drucktechniken Tiefdruck- und Digitaldruckverfahren angewendet. Das Tiefdruckverfahren ist eine Drucktechnik, bei der die abzubildenden Elemente als Vertiefungen in einer Druckform vorliegen, die vor dem Druck eingefärbt wird. Die Druckfarbe befindet sich vornehmlich in den Vertiefungen und wird aufgrund von Anpressdruck der Druckform und von Adhäsionskräften auf den zu bedruckenden Gegenstand, wie zum Beispiel ein Trägermaterial, übertragen. Hingegen wird beim Digitaldruck das Druckbild direkt von einem Computer in eine Druckmaschine, wie zum Beispiel einen Laserdrucker oder Tintenstrahldrucker, übertragen. Dabei entfällt die Verwendung einer statischen Druckform. Bei der Verwendung des indirekten Tiefdrucks werden mehrere Druckwalzen eingesetzt. Beim Digitaldruck wird mit mindestens vier Farben (CMYK) gearbeitet.

Ebenfalls ist es vorstellbar, die genannten Drucktechniken aus Tief- und Digitaldruck zu kombinieren. Eine geeignete Kombination der Drucktechniken kann zum einen unmittelbar auf der Trägerplatte bzw. der zu bedruckenden Schicht erfolgen oder auch vor dem Drucken durch Anpassung der verwendeten elektronischen Datensätze.

So ist es zum Beispiel denkbar, die in der EP 24 52 829 A1 beschriebene Methode auf die vorliegenden Platten anzuwenden. Hierbei wird zunächst ein erstes Dekor auf eine gegebenenfalls vorbehandelte Oberfläche der Holzwerkstoffplatte im Tiefdruckverfahren aufgedruckt und in einem zweiten, sich unmittelbar anschließenden Schritt ein zweites im Digitaldruck erzeugtes Dekor aufgedruckt.

Es ist auch möglich, den Aufbau aus mindestens einer Grundierungsschicht, mindestens einer Deckschicht (z.B. Weißgrund), mindestens einer Primerschicht und mindestens einem Dekor unter dem Oberbegriff der Dekorschicht zusammenzufassen. Die Reihenfolge der Anordnung der Schichten in der Dekorschicht wäre von unten nach oben gesehen: (Trägerplatte-) Grundierungsschicht- Deckschicht (z.B. Weißgrund)-Primerschicht-aufgedrucktes Dekor.

In einer weiteren Ausführungsform der vorliegenden WPC-Platte umfasst die mindestens eine auf dem Dekor angeordnete Verschleißschutzschicht mindestens eine wärmehärtbare Harzschicht. Eine solche wärmehärtbare Harzschicht wird auch als Flüssigoverlay bezeichnet. Das wärmehärtbare Harz ist bevorzugt ein formaldehydhaltiges Harz, insbesondere ein Melamin-Formaldehyd-Harz und Melamin-Harnstoff-Formaldehyd-Harz.

Insbesondere umfasst die mindestens eine auf dem Dekor angeordnete Verschleißschutzschicht mindestens eine wärmehärtbare Harzschicht mit abriebfesten Partikeln, natürlichen und/oder synthetischen Fasern. Als abriebfeste Partikel werden zum Beispiel Korundpartikel oder Glaspartikel sowie natürliche Fasern, wie zum Beispiel Zellulosefasern oder auch Holzfasern, eingefügt. Darüber hinaus werden Härter, Netz- und Trennmittel in einer derartigen Flüssigoverlayschicht bevorzugterweise eingesetzt.

In einer Variante werden mehrere wärmehärtbare Harzschichten verwendet, die übereinander angeordnet sind und entsprechend nacheinander aufgetragen werden.

So umfasst die Beschichtung in einer Ausführungsform z.B. drei Harzlagen oder Harzschichten, wobei in jeder der drei Harzlagen verschiedene Additive in Form von abriebfesten Partikel, zum Beispiel Korundpartikel, und/oder natürlichen und/oder synthetischen Fasern, wie zum Beispiel Zellulosefasern, vorhanden sein können.

Ein Verfahren zur Herstellung der vorliegenden Verschleißschutzschicht oder Flüssigoverlayschicht ist unter anderem in der EP 233 86 93 A1 beschrieben.

In Analogie wird zunächst eine erste Glaspartikel und Zellulosefasern enthaltene flüssige Harzschicht in einer Menge zwischen 5 und 50 g/m², bevorzugt zwischen 10 und 30 g/m², insbesondere bevorzugt zwischen 10 und 20 g/m² auf die Dekorschicht aufgebracht. Nach Aufbringen der ersten flüssigen Harzschicht erfolgt ein erster Trocknungsschritt, in welchem die erste Harzschicht z.B. bis auf eine Restfeuchte von 3 bis 6 % getrocknet wird.

Auf die erste Harzschicht wird eine zweite Korundpartikel enthaltene flüssige Harzschicht in einer Menge zwischen 10 und 150 g/m², bevorzugt 20 und 100 g/m², insbesondere bevorzugt 30 und 80 g/m² aufgetragen. Die zweite Harzschicht wird z.B. bis auf eine Restfeuchte von 3 bis 6 % angetrocknet.

Auf die zweite Harzschicht wird abschließend mindestens eine dritte Glaspartikel und Zellulosefasern enthaltene flüssige Harzschicht in einer Menge zwischen 5 und 100 g/m², bevorzugt 10 und 80 g/m², insbesondere bevorzugt 20 und 50 g/m² aufgebracht, welche ebenfalls bevorzugt auf eine Restfeuchte von 3 bis 6 % getrocknet wird.

In einer weiteren Variante der vorliegenden WPC-Platte wird auf der dem Dekor gegenüberliegenden Seite der Trägerplatte (d.h. Unterseite) mindestens ein Gegenzug, insbesondere in Form eines wärmehärtbaren Harzes bzw. Kunstharzes, aufgebracht. Durch das Aufbringen eines Gegenzuges werden insbesondere die durch die auf der Oberseite der Trägerplatte aufgebrachten Schichten wirkenden Zugkräfte ausgeglichen.

Als wärmehärtbares Harz wird ein Aminoplastharz, bevorzugt ein Formaldehydharz wie z.B. ein Melamin-Formaldehyd-Harz, ein Melamin-Harnstoff-Formaldehydharz oder ein Harnstoff-Formaldehyd-Harz eingesetzt. Die Verwendung von Mischharzen ist ebenfalls möglich. Das wärmehärtbare Harz kann in einer oder mehreren Lagen auf die Unterseite der Trägerplatte vorgesehen sein, wobei die die Menge und Dicke jeder einzelnen Lage gleich oder unterschiedlich sein kann.

Die auf die Unterseite der Trägerplatte aufgetragene Menge an flüssigem Kunstharz beträgt zwischen 50 und 300 g/m², bevorzugt zwischen 100 und 200 g/m². Der Feststoffgehalt der wässrigen Harzlösung liegt zwischen 30 und 80 Gew%, bevorzugt 40 und 60 Gew%, insbesondere bevorzugt bei 55 Gew%. Das Flüssigharz kann zusätzlich geeignete Netzmittel, Härter, Trennmittel und Entschäumer aufweisen.

Wie oben angeführt handelt es sich bei der vorliegenden Platte um eine laminierte WPC-Platte.

Die Laminierung erfolgt durch Verpressen des gesamten oben beschriebenen Schichtaufbaus aus Harz- und Farbschichten unter Druck- und Temperatureinfluss. Das Verpressen des Schichtaufbaus kann in einer Kurztaktpresse (KT-Presse) oder auch in einer kontinuierlichen Presse erfolgen. Während des heißen Verpressens schmelzen die verschiedenen Kunstharzschichten an und es kommt zu einer Vernetzung bzw. Verlinkung der Schichten untereinander.

Eine besonders bevorzugte Ausführungsform der vorliegenden WPC-Platte weist den folgenden Schichtaufbau auf (von unten nach oben gesehen): mindestens eine Harzschicht als Gegenzug- WPC-Trägerplatte- mindestens eine Grundierungsschicht- mindestens eine Weißgrundschicht als Deckschicht- mindestens eine Primerschicht - mindestens eine direkt aufgedruckte Dekorschicht - mindestens eine Glaspartikel und Zellulosefasern enthaltene Harzschicht - mindestens eine Korundpartikel enthaltene Harzschicht - mindestens eine Glaspartikel und Zellulosefasern enthaltene Harzschicht.

Es ist des Weiteren auch möglich und wünschenswert, die Oberseiten der Holzwerkstoffplatten mit einer Prägestruktur zu versehen. Dies erfolgt bevorzugt unmittelbar im Anschluss an das Aufbringen der Dekor- und Verschleißschicht. Die Prägestrukturen sind bevorzugt als zumindest teilweise Synchronstrukturen ausgebildet. Die Prägestrukturen können aufgrund der relativen Flexibilität und Verformbarkeit der WPC-Trägerplatte auch im Vergleich zu herkömmlichen MDF- oder HDF-Trägerplatten tiefer ausgebildet sein, d.h. die Prägestrukturen können tiefer in die WPC-Trägerplatten eindringen.

Gemäß einer weiteren Ausgestaltung kann es auch vorgesehen sein, dass die Holzwerkstoffplatte in Form eines WPC zumindest in einem Randbereich der Platte eine Profilierung aufweist, wobei das Profil beispielsweise die Einbringung eines Nut- und/oder Federprofils in eine Kante bzw. Seitenfläche der WPC-Platte ermöglicht, wobei die so erhaltenen Paneele bzw. Platten miteinander verbunden werden können und eine schwimmende Verlegung und Abdeckung eines Bodens ermöglichen.

Die vorliegende laminierte Holz-Kunststoff-Verbundwerkstoff (WPC)-Platte wird in einem Verfahren umfassend die folgenden Schritte hergestellt:
- Herstellen einer Trägerplatte aus einem Holzpartikel-Kunststoff-Gemisch mit mindestens einer auf einer Seite, bevorzugt auf der Oberseite, der Trägerplatte aufgestreuten Schicht aus mindestens einem lösemittelfreien Trennmittel,
- Aufbringen von mindestens einer flüssigen Harzschicht mit einem Feststoffgehalt der wässrigen Kunstharzlösung zwischen 30 und 80% als Grundierungsschicht auf die mit dem Trennmittel versehene Seite der Trägerplatte,
- Aufbringen von mindestens einem Weißgrund als Deckschicht auf die mindestens eine Grundierungsschicht;
- Bedrucken der mindestens einen mit dem Trennmittel versehenen Seite der Trägerplatte im Direktdruck unter Ausbildung eines Dekors,
- Auftragen von mindestens einer Verschleißschutzschicht auf das Dekor, und
- Verpressen von Trägerplatte, Dekor und Verschleißschutzschicht.

Die als Trägerplatte verwendete WPC-Platte wird bevorzugt in einem Verfahren bereitgestellt, welches die folgenden Schritte umfasst:
- Aufbringen eines Gemisches aus Holzpartikeln und Kunststoff, insbesondere eines mit mindestens einer organischen Verbindung funktionalisierten Kunststoffes, auf ein erstes Transportband unter Ausbildung eines Vorvlieses und Einführen des Vorvlieses in mindestens einen ersten Temperofen zum Vorverdichten;
- Aufstreuen von mindestens einem lösemittelfreien Trennmittel auf mindestens eine Oberfläche des vorverdichteten Vlieses;
- Überführen des mit dem lösemittelfreien Trennmittel bestreuten vorverdichteten Vlieses in mindestens eine Doppelbandpresse zum weiteren Verdichten zu einer Holzwerkstoffplatte; und
- Abkühlen der verdichteten Holzwerkstoffplatte in mindestens einer Kühlpresse.

Die WPC-Trägerplatte wird demnach in einem dreistufigen Prozess bereitgestellt, in welchem zunächst aus einem Gemisch von Holzpartikeln, z.B. in Form von Holzfasern, und Kunststoffen, insbesondere thermoplastischen Kunststoffen, ein Vlies bzw. eine Dämmstoffmatte mit einer niedrigen Rohdichte hergestellt wird.

Entsprechend der gewünschten Zusammensetzung des Holzpartikel-Kunststoff-Gemisches werden die einzelnen Komponenten (Holzpartikel und Kunststoff) in einem Mischer innig vermischt. Das Vermischen der Komponenten kann z.B. durch Eingeben in eine Blasleitung erfolgen. Hier erfolgt auf dem Weg von der Zugabe der Komponenten bis zum Vorratsbehälter eine intensive Vermischung durch die eingeblasene Luft als Transportmittel. Die intensive Vermischung der Komponenten wird im Vorratsbehälter durch die eingeblasene Transportluft noch fortgesetzt.

Aus dem Vorratsbehälter wird das Holzpartikel-Kunststoff-Gemisch, z.B. nach Abwiegen auf einer Flächenwaage, auf ein erstes Transportband über seine Breite gleichmäßig aufgeblasen. Die Menge an zugeführten Holzpartikel-Kunststoff-Gemisch richtet sich nach der gewünschten Schichtdicke und der gewünschten Rohdichte des herzustellenden Vorvlieses. Typische Flächengewichte des gestreuten Vorvlieses können dabei in einem Bereich zwischen 3.000 und 10.000 g/m², bevorzugt zwischen 5.000 bis 7.000 g/m², liegen. Wie bereits erwähnt wird die Breite des gestreuten Vorvlieses durch die Breite des ersten Transportbandes bestimmt, und kann z.B. in einem Bereich bis zu 3.000 mm, bevorzugt 2.900 mm, insbesondere bevorzugt bis zu 2.800 mm liegen.

Nach dem Aufbringen des Holzpartikel-Kunststoff-Gemisches auf ein erstes Transportband unter Ausbildung eines Vorvlieses wird das Vorvlies in mindestens einem ersten Temperofen zum Vorverdichten eingeführt. In einer besonders bevorzugten Ausführungsform des Verfahrens wird das Vorvlies aus Holzpartikeln und Kunststoff in dem mindestens einen Temperofen auf eine Temperatur erhitzt, die der Schmelztemperatur des verwendeten Kunststoffes entspricht oder darüber liegt.

Die Temperaturen im Temperofen können zwischen 150 und 250°C, bevorzugt 160 und 230°C, insbesondere bevorzugt 160 und 200°C liegen. Die Kerntemperatur des Vorvlieses liegt bevorzugt in einem Bereich zwischen 100 und 150°C, insbesondere bevorzugt bei ca. 130°C. Während des Erhitzens im Temperofen erfolgt ein Anschmelzen des Kunststoffmaterials, wodurch eine innige Verbindung zwischen dem Kunststoffmaterial wie z.B. den Kunststofffasern mit den Holzfasern hervorgerufen wird und gleichzeitig eine Verdichtung des Vorvlieses erfolgt.

Die Temperaturen im Temperofen werden beispielsweise durch eingeblasene Heißluft erhalten. Das Vlies wird auf einen Abstand zusammen gefahren und dann von heißer Luft durchströmt, so dass sich Klebepunkte vorrangig zwischen den Kunststofffasern ergeben aber auch zwischen Kunststoff- und Holzfasern.

In einer weiteren Ausführungsform des vorliegenden Verfahrens weist das vorverdichtete Vlies nach Austritt aus dem Temperofen eine Rohdichte (bzw. ein Raumgewicht) zwischen 40 und 200 kg/m³, bevorzugt 60 und 150 kg/m³, insbesondere bevorzugt zwischen 80 und 120 kg/m³ auf. Die Dicke des vorverdichteten Vlieses kann dabei zwischen 20 und 100 mm, bevorzugt 30 und 50 mm, insbesondere bevorzugt 35 und 45 mm liegen. Es ist insbesondere bevorzugt, wenn der Vorschub des Förderbandes bzw. Transportbandes im Temperofen in einem Bereich zwischen 5 und 15 m/min, bevorzugt zwischen 6 und 12 m/min liegt.

Auf dieses vorverdichtete Vlies wird z.B. unter Verwendung einer geeigneten Streuapparatur (z.B. Pulverstreuer), die bevorzugt vor der Doppelbandpresse platziert ist, ein lösemittelfreies Trennmittel (z.B. in Form von nicht-klebenden Fasern oder Pulver) aufgestreut. Bei dem verwendeten Trennmittel handelt es sich somit um eine trockene, streufähige Substanz, die keine Lösemittel wie z.B. Wasser oder organische Flüssigkeiten umfasst. Die Verwendung eines lösemittelfreien Trennmittels verhindert einerseits ein Ankleben des Vlieses an die Bänder der Doppelbandpresse und andererseits wird dem Vlies keine zusätzliche Feuchtigkeit zugeführt, so dass ein zusätzlicher Trocknungsschritt entfällt. Hinsichtlich der Art des Trennmittels wird auf die obigen Ausführungen verwiesen.

Das mit dem lösemittelfreien Trennmittel bestreute Vlies bzw. die Dämpfstoffmatte mit einer niedrigen Rohdichte wird anschließend zunächst auf einer Doppelbandpresse unter hohem Druck und hoher Temperatur verdichtet und anschließend in einer Kühlpresse abgekühlt.

Wie oben angeführt, wird das Trennmittel auf mindestens eine Oberfläche, bevorzugt auf die Oberseite des vorverdichteten Vlieses mittels Streuen aufgebracht. Es ist aber auch vorstellbar und generell möglich, das Trennmittel auch auf die Unterseite des Vlieses aufzutragen. Zum Auftragen des Trennmittels auf die Unterseite des vorverdichteten Vlieses wird der als Trennmittel verwendete Feststoff auf ein Transportband aufgestreut, dass anschließend an die Unterseite des vorverdichteten Vlieses angedrückt wird. Dies erfolgt unmittelbar nach Verlassen des Temperofens. Durch die Temperatur des vorverdichteten Vlieses sind Teile der Kunststoffe angeschmolzen. An diesen angeschmolzenen Kunststoffen kleben die Trennmittelpartikel und werden zusammen mit dem vorverdichteten Vlies in die Presse transportiert.

Das mindestens eine Trennmittel wird in einer Menge zwischen 10 und 1000 g/m², bevorzugt zwischen 50 und 500 g/m², insbesondere bevorzugt zwischen 100 und 200 g/m² auf die Oberfläche des vorverdichteten Vlieses aufgestreut.

Nach Aufstreuen des Trennmittels auf das vorverdichtete Vlies wird in einer Ausführungsform des Verfahrens das vorverdichtete und mit dem Trennmittel bestreute Vlies in der mindestens einen Doppelbandpresse bei Temperaturen zwischen 150 und 250°C, bevorzugt 180 und 230°, bevorzugt 200 und 220°C und einem Druck zwischen 2 MPa und 10 MPa, bevorzugt 3 MPa und 8 MPa, insbesondere bevorzugt 5 und 7 MPa verdichtet. Der Vorschub der Doppelbandpresse beträgt zwischen 4 und 15 m/min, bevorzugt zwischen 6 und 12 m/min.

In einer weiteren Variante des vorliegenden Verfahrens wird das vorverdichtete Vlies in der mindestens einen Doppelbandpresse auf eine Dicke zwischen 2 und 20 mm, bevorzugt 3 und 15 mm, insbesondere bevorzugt 4 und 10 mm verdichtet.

Nach Verlassen der mindestens einen Doppelbandpresse wird die verdichtete Holzwerkstoffplatte in mindestens eine Kühlpresse eingeführt, in welcher ein Abkühlen der verdichteten Holzwerkstoffplatte auf Temperaturen zwischen 10 und 100°C, bevorzugt 15 und 70°C, insbesondere bevorzugt 20 und 40°C erfolgt. Dabei wird in der mindestens einen Kühlpresse ein Druck angewendet, der identisch oder zumindest fast identisch ist zu dem Druck in der Doppelbandpresse, d.h. in der Kühlpresse herrscht ein Druck zwischen 2 MPa und 10 MPa, bevorzugt 3 MPa und 8 MPa, insbesondere bevorzugt 5 und 7 MPa.

Das Einführen der verdichteten Holzwerkstoffplatte in eine Kühlpresse ist notwendig, da die Rückstellkräfte der Fasern so groß sein können, dass die Platte ohne den Schritt des Kühlpressens nach dem Verdichten in der Doppelbandpresse wieder aufgehen würde.

Nach dem Verlassen der Kühlpresse weisen die verdichteten Holzwerkstoffplatten eine Dicke zwischen 2 und 15 mm, bevorzugt 3 und 12 mm, insbesondere bevorzugt 4 und 10 mm auf.

Die Rohdichte der verdichteten Holzwerkstoffplatten nach Verlassen der Kühlpresse liegt in einem Bereich zwischen 500 und 1500 kg/m³, bevorzugt zwischen 650 und 1300 kg/m³, insbesondere bevorzugt zwischen 800 und 1100 kg/m³.

Zur Herstellung einer Holzwerkstoffplatte mit einer Rohdichte von 850 kg/m³ wird z.B. vorteilhafterweise ein Pressdruck in der Doppelbandpresse (und auch Kühlpresse) von 4,5 bis 5 MPa (45-50 bar) bei einer Presstemperatur in der Doppelbandpresse des Vorlaufes von 235°C und einer Presstemperatur auf der Oberfläche der Platte von 220°C angelegt. Im Falle der Herstellung einer Holzwerkstoffplatte mit einer Rohdichte von 950 kg/m³ wird vorteilhafterweise ein Pressdruck in der Doppelbandpresse (und auch Kühlpresse) von 5,5 bis 6 MPa (55-60 bar) bei einer Presstemperatur in der Doppelbandpresse des Vorlaufes von 235°C und einer Presstemperatur auf der Oberfläche der Platte von 220°C angelegt.

In einer besonders bevorzugten Ausführungsform umfasst das Verfahren zur Herstellung der WPC-Trägerplatte die folgenden Schritte:
- Bereitstellen von Holzfasern und Kunststofffasern, insbesondere eines mit mindestens einer organischen Verbindung funktionalisierten Kunststoffes;
- Bilden eines Gemisches aus den Holzfasern und den Kunststofffasern in einer Blasleitung;
- Zwischenpuffern bzw. Zwischenlagern des Gemisches in einem Speiser;
- Aufblasen des Gemisches auf eine erste Walze unter Ausbildung eines ersten Vorvlieses (Airlay);
- Zerfasern des ersten Vorvlieses und nochmaliges Aufblasen des Gemisches auf eine zweite Walze unter Ausbildung eines zweiten Vorvlieses (Airlay);
- Überführen des zweiten Vorvlieses auf ein Transportband und Einführen des zweiten Vorvlieses in den mindestens einen ersten Temperofen zum Vorverdichten durch Thermobonding zu einer Matte bzw. einem Vlies;
- Aufstreuen eines lösemittelfreien Trennmittels auf die Oberfläche des vorverdichteten Vlieses bzw. der Matte;
- Überführen der vorverdichteten Matte bzw. des vorverdichteten Vlieses in die mindestens eine Doppelbandpresse zum weiteren Verdichten zu einer Trägerplatte, und
- Kühlen der Trägerplatte, insbesondere in einer Kühlzone der mindestens einen Presse.

Das Bereitstellen der Holzfasern und Kunststofffasern erfolgt üblicherweise in Form von Ballen, die in entsprechenden Ballenöffnern geöffnet werden. Nach den jeweiligen Ballenöffnern werden die Fasern in separaten Wiegeeinrichtungen abgewogen und in die Blasleitung eingegeben, in welcher auf dem Weg von der Zugabe der Fasern und ggf. weiteren Komponenten bis zum Vorratsbehälter bzw. Speiser eine intensive Vermischung durch die eingeblasene Luft als Transportmittel erfolgt. Aus dem Vorratsbehälter bzw. Speiser wird das Gemisch aus Holzfasern und Kunststofffasern nach Abwiegen auf einer Flächenwaage auf ein erstes Transportband mit erster Walze über seine Breite gleichmäßig unter Ausbildung eines ersten Vorvlieses aufgeblasen. Das erste Vorvlies läuft am Ende des ersten Transportbandes in eine Zerfaserungsvorrichtung ein. Das zerfaserte Gemisch wird auf ein zweites Transportband mit zweiter Walze unter Ausbildung eines zweiten Vorvlieses aufgeblasen.

Das so erhaltene Vorvlies (hier zweites Vorvlies) wird jetzt in den bereits oben beschriebenen Temperofen zum Vorverdichten unter Ausbildung des vorverdichteten Vlieses bzw. der vorverdichteten Matte eingeführt, welches anschließend mit dem lösemittelfreien Trennmittel bestreut wird und in die mindestens eine Doppelbandpresse zum weiteren Verdichten zu einer Holzwerkstoffplatte überführt wird.

Die mit dem vorliegenden Verfahren hergestellten WPC-Trägerplatten sind durch eine Quellung von weniger als 5%, bevorzugt weniger als 3%, insbesondere bevorzugt weniger als 1% gekennzeichnet (DIN EN 317).

In einer Ausführungsform umfasst das vorliegende Verfahren zur Herstellung der laminierten WPC-Platten folgende weitere Schritte:
- Aufbringen von mindestens einer flüssigen Harzschicht als Grundierungsschicht auf die mit dem Trennmittel versehene Seite der Trägerplatte,
- Aufbringen von mindestens einer Deckschicht, insbesondere von mindestens einem Weißgrund, auf die mindestens eine Grundierungsschicht;
- Aufbringen von mindestens einer Primerschicht auf die mindestens eine Deckschicht;
- Bedrucken der mindestens einen Primerschicht im Direktdruck unter Ausbildung von mindestens einem Dekor; und
- Aufbringen von mindestens einer Verschleißschutzschicht auf das mindestens eine Dekor.

Hinsichtlich der aufzutragenden Mengen an Flüssigharz, Weißgrund für Deckschicht, Primer und/oder Dekor wird auf die obigen Ausführungen verwiesen. Die Verschleißschutzschicht kann, wie oben bereits ausführlich erläutert, aus mehreren Harzschichten mit abriebfesten Partikeln hergestellt werden.

Neben den Schritten zum Beschichten und Bedrucken der Oberseite kann das vorliegende Verfahren auch den Schritt des Aufbringens von mindestens einer Schicht aus einem flüssigen Kunstharz auf die dem Dekor gegenüberliegende Seite der Trägerplatte (Gegenzug) umfassen. Das Auftragen der mindestens einen Verschleißschutzschicht auf die Oberseite der Trägerplatte und der mindestens einen Schicht aus flüssigen Kunstharz auf die Unterseite der Trägerplatte erfolgt bevorzugt unter Verwendung einer Doppelauftragsvorrichtung. Derartige Vorrichtungen sind bekannt und z.B. im Detail in der EP 2338693 A1 beschrieben.

In einer weiteren Variante des vorliegenden Verfahrens wird der Schritt des Verpresses bzw. Laminierens bei einem Druck zwischen 10 und 100 bar (1-10 MPa), bevorzugt zwischen 20 und 80 bar (2-8 MPa), insbesondere bevorzugt zwischen 30 und 50 bar (3-5 MPa), einer Temperatur zwischen 150 und 250°C, bevorzugt zwischen 160 und 210°C und einer Haltezeit zwischen 5 und 20 Sekunden, bevorzugt zwischen 8 und 15 Sekunden, insbesondere bevorzugt zwischen 10 und 12 Sekunden durchgeführt.

In einer bevorzugten Ausführungsform erfolgt das Verpressen des gesamten Schichtaufbaus z.B. in einer Kurztaktpresse bei einem Druck zwischen 20 und 50 bar (2 -5 MPa), einer Temperatur zwischen 160 und 210°C und einer Haltezeit zwischen 8 und 12 Sekunden.

Es ist bevorzugt, wenn der Schritt des Verpressens in Gegenwart von Pressblechen zur Einführung von Prägestrukturen durchgeführt wird. Dies ermöglicht das Einbringen von Synchronstrukturen in die Laminatoberfläche.

Die vorliegende Erfindung wird nachfolgend anhand eines Ausführungsbeispiels näher erläutert.

### Ausführungsbeispiel 1: Flüssigaufbau

Aus Ballenöffnern wurden Holzfasern (44 Gew%) und BiCo-Fasern (56 Gew%, Polypropylen/ Polyethylen gegraftet (2% MSA)) in eine Mischvorrichtung gefördert. Anschließend wurde aus dem Gemisch der Fasern in einer Streuvorrichtung ein Vlies gebildet (Flächengewicht: 4.200g/m²), dass auf ein Förderband in einer Breite von 2.800 mm abgelegt wurde. Der Vorschub des Förderbands lag bei ca. 5 m/min. Das Vlies wurde in einem Durchströmungsofen bei Temperaturen von bis zu 160°C auf eine Stärke von 35 mm vorverdichtet. Dabei erreichte das Vlies eine Kerntemperatur von ca. 130°C.

Hinter dem Durchströmungsofen befindet sich ein Streugerät mit dem auf die Oberfläche des verdichteten Vlieses ca. 100 g trockene Holzfasern / m² im Durchlauf aufgestreut werden.

Nach dem Durchströmungsofen wird die Matte in einer Doppelbandpresse bei einer Produktionsgeschwindigkeit von 6 m/min auf eine Stärke von 5,2 mm verdichtet. Eine Abrollvorrichtung auf der Unterseite der Doppelbandpresse führt dem vorverdichteten Vlies ein Gegenzugpapier (60 g / m²) zu. Die Öltemperatur im Vorlauf der Doppelbandpresse lag bei 220 °C. Hinter der Doppelbandpresse zur Verdichtung schloss sich eine Kühlpresse mit Wasserkühlung an, in der das WPC auf ca. 15- 40°C abgekühlt wurde. Aus dem Endlosstrang wurden im Anschluss daran Formate geschnitten (2.800 x 1.500 mm).

Die WPC-Formate wurden nach Abkühlung wie folgt oberflächenveredelt:
Die Platten werden auf der Oberseite durch einen Reinigungsschliff von losen Fasern befreit. Auf die Oberseite wird ein flüssiges Melamin-Formaldehyd-Harz (20-35 g/m², Feststoffgehalt 55 Gew%) aufgetragen und in einem Konvektionstrockner oder NIR-Trockner zwischengetrocknet. Es folgen ein flüssiger Weißgrund (25-35 g/m² pigmentiertes Casein oder Soja-Protein) und flüssiger Primer (5-10 g/m²). Nach dem Auftrag jeder Schicht erfolgt ein Zwischentrocknen. Das Dekor wird analog im ein- bis vier-Farbdruck und/oder digital gedruckt (1-10 g Farbe fl./m²).

Auf diese Dekorschicht werden nacheinander als Verschleißschicht eine erste Harzschicht (MF-Harz, 10-20 g/m²) enthaltend Glaspartikel und Zellulosefasern, eine zweite Harzschicht (MF-Harz, 30-100 g/m2) enthaltend Korundpartikel (5 bis 12 kg / 30 kg Harz) und eine dritte Harzschicht (MF-Harz, 10-50 g/m²) enthaltend Glaspartikel (1,6 kg / 30 kg Harz) und Zellulosefasern (0,1-1 kg / 30 kg Harz) aufgetragen. Die eingesetzten Harze haben dabei jeweils einen Feststoffgehalt von ca. 55 Gew%. Nach Auftrag jeder einzelnen Harzschicht erfolgt jeweils ein Zwischentrocknen mit Konvektions- oder NIR-Trockner.

Parallel zum Auftrag der Verschleißschicht auf der Oberseite wird als Gegenzug eine flüssige Harzschicht (MF-Harz, 100-200 g/m²) auf die Unterseite der Trägerplatte aufgebracht.

Der gesamte Schichtaufbau wird in Kurztaktpresse bei einem Druck von 20-50 bar, einer Temperatur von 160-210°C und einer Haltezeit von 8-12 Sekunden zu einem Laminat verpresst.

Nach Abkühlen wurden aus den oben genannten Formaten Fussbodendielen produziert, die an den Seitenflächen mit Verbindungsprofilen nach Art einer Nut und Feder ausgestattet werden. Die so erhaltenen Paneele sind zur Abdeckung eines Bodens geeignet und werden schwimmend verlegt.

### Ausführungsbeispiel 2: Flüssigaufbau

Aus Ballenöffnern wurden Holzfasern (44 Gew%) und BiCo-Fasern (56 Gew%, Polypropylen/ Polyethylen gegraftet (2% MSA)) in eine Mischvorrichtung gefördert. Anschließend wurde aus dem Gemisch der Fasern in einer Streuvorrichtung ein Vlies gebildet (Flächengewicht: 4.200g/m²), dass auf ein Förderband in einer Breite von 2.800 mm abgelegt wurde. Der Vorschub des Förderbands lag bei ca. 5 m/min. Das Vlies wurde in einem Durchströmungsofen bei Temperaturen von bis zu 160°C auf eine Stärke von 35 mm vorverdichtet. Dabei erreichte das Vlies eine Kerntemperatur von ca. 130°C.

Hinter dem Durchströmungsofen befindet sich ein Streugerät mit dem auf die Oberfläche des verdichteten Vlieses ca. 80 g trockene gebleichte Cellulosefasern / m² im Durchlauf aufgestreut werden.

Nach dem Durchströmungsofen wird die Matte in einer Doppelbandpresse bei einer Produktionsgeschwindigkeit von 6 m/min auf eine Stärke von 5,2 mm verdichtet. Eine Abrollvorrichtung auf der Unterseite der Doppelbandpresse führt dem vorverdichteten Vlies ein Gegenzugpapier (60 g / m²) zu. Die Öltemperatur im Vorlauf der Doppelbandpresse lag bei 220 °C. Hinter der Doppelbandpresse zur Verdichtung schloss sich eine Kühlpresse mit Wasserkühlung an, in der das WPC auf ca. 15- 40°C abgekühlt wurde. Aus dem Endlosstrang wurden im Anschluss daran Formate geschnitten (2.800 x 1.500 mm).

Die WPC-Formate wurden nach Abkühlung wie folgt oberflächenveredelt:
Die Platten werden auf der Oberseite durch einen Reinigungsschliff von losen Fasern befreit.

Auf die Oberseite wird ein flüssiges Melamin-Formaldehyd-Harz (20-35 g/m², Feststoffgehalt 55 Gew%) aufgetragen und in einem Konvektionstrockner oder NIR-Trockner zwischengetrocknet. Es folgen ein flüssiger Weißgrund (15-25 g/m² pigmentiertes Casein oder Soja-Protein) und flüssiger Primer (5-10 g/m²). Nach dem Auftrag jeder Schicht erfolgt ein Zwischentrocknen. Das Dekor wird analog im ein- bis vier-Farbdruck und/oder digital gedruckt (1-10 g Farbe fl./m²).

Auf diese Dekorschicht werden nacheinander als Verschleißschicht eine erste Harzschicht (MF-Harz, 10-20 g/m²) enthaltend Glaspartikel und Zellulosefasern, eine zweite Harzschicht (MF-Harz, 30-100 g/m2) enthaltend Korundpartikel (5 bis 12 kg / 30 kg Harz) und eine dritte Harzschicht (MF-Harz, 10-50 g/m²) enthaltend Glaspartikel (1,6 kg / 30 kg Harz) und Zellulosefasern (0,1-1 kg / 30 kg Harz) aufgetragen. Die eingesetzten Harze haben dabei jeweils einen Feststoffgehalt von ca. 55 Gew%. Nach Auftrag jeder einzelnen Harzschicht erfolgt jeweils ein Zwischentrocknen mit Konvektions- oder NIR-Trockner.

Parallel zum Auftrag der Verschleißschicht auf der Oberseite wird als Gegenzug eine flüssige Harzschicht (MF-Harz, 100-200 g Harz fl./m², Feststoffgehalt Harz: ca. 55 Gew%) auf die Unterseite der Trägerplatte aufgebracht.

Der gesamte Schichtaufbau wird in Kurztaktpresse bei einem Druck von 20-50 bar, einer Temperatur von 160-210°C und einer Haltezeit von 8-12 Sekunden zu einem Laminat verpresst.

Nach Abkühlen wurden aus den oben genannten Formaten Fussbodendielen produziert, die an den Seitenflächen mit Verbindungsprofilen nach Art einer Nut und Feder ausgestattet werden. Die so erhaltenen Paneele sind zur Abdeckung eines Bodens geeignet und werden schwimmend verlegt.

### Ausführungsbeispiel 3: Papier-Schichtaufbau

Es wird ein Vlies gemäß Ausführungsbeispiel 2 hergestellt und in einem Durchströmungsofen vorverdichtet. Hinter dem Durchströmungsofen befindet sich ein Streugerät mit dem auf die Oberseite des verdichteten Vlies ca. 100 g trockene Holzfasern / m² im Durchlauf aufgestreut werden. Zum Auftragen der Holzfasern auf die Unterseite des Vlieses werden ca. 100 trockene Holzfasern / m2 auf das Transportband gestreut.

Nach dem Durchströmungsofen wird die Matte bzw. das Vlies wie folgt weiterveredelt.

Die WPC-Formate wurden nach Abkühlung auf der Oberseite mit einem Dekorpapier (60-80 g/m² Papiergewicht, Harzauftrag: 80-100%) versehen. Auf dem Dekorpapier wird nachfolgend ein mit Verschleißpartikeln versehenes Overlaypapier (25-50 g/m² Papiergewicht, Harzauftrag: 250%, Korundmenge: 20-35 g/m²) angeordnet. Die Rückseite der WPC-Platte wird mit Gegenzugpapier (60-100 g/m² Papiergewicht, Harzauftrag: 80-120%) versehen. Der Schichtaufbau wird in einer Kurztaktpresse verpresst.

Nach Abkühlen wurden aus den oben genannten Formaten Fussbodendielen produziert, die an den Seitenflächen mit Verbindungsprofilen nach Art einer Nut und Feder ausgestattet werden. Die so erhaltenen Paneele sind zur Abdeckung eines Bodens geeignet und werden schwimmend verlegt.

## Patentansprüche

1. Laminierte Holz-Kunststoff-Verbundwerkstoff (WPC)-Platte,
umfassend
- mindestens eine Trägerplatte aus einem Holzpartikel-Kunststoff-Gemisch,
- mindestens eine auf einer Seite, bevorzugt auf der Oberseite, der Trägerplatte angeordnete Schicht aus mindestens einem lösemittelfreien Trennmittel,
- mindestens einen im Direktdruck aufgedruckten Dekor, und
- mindestens eine auf dem Dekor angeordnete Verschleißschutzschicht,
wobei zwischen der mindestens einen Trennmittelschicht und dem mindestens einem Dekor mindestens eine Grundierungsschicht, wobei die mindestens eine Grundierungsschicht eine Schicht aus einem flüssigen Kunstharz mit einem Feststoffgehalt der wässrigen Kunstharzlösung zwischen 30 und 80% ist, und mindestens eine Deckschicht, wobei die mindestens eine Deckschicht in Form eines Weißgrundes vorliegt, vorgesehen sind.

2. WPC-Platte nach Anspruch 1, **dadurch gekennzeichnet, dass** das mindestens eine lösemittelfreie Trennmittel als Feststoff, insbesondere als Pulver, Granulat und/oder Fasern, auf der Trägerplatte vorliegt.

3. WPC-Platte nach einem der vorhergehenden Ansprüche, **dadurch gekennzeichnet, dass** das mindestens eine Trennmittel ausgewählt ist aus einer Gruppe enthaltend pflanzliche oder synthetische Feststoffe, insbesondere Holzpartikel, Holzstaub, Holzmehl, Holzfasern, Schleifstaub, gebleichte Cellulosefasern, Kunststofffasern oder Kunstharzgranulate.

4. WPC-Platte nach einem der vorhergehenden Ansprüche, **dadurch gekennzeichnet, dass** die mindestens eine Grundierungsschichteine Schicht aus einem flüssigen Kunstharz mit einem Feststoffgehalt der wässrigen Kunstharzlösung zwischen 40 und 60%, bevorzugt 55% ist.

5. WPC-Platte nach einem der vorhergehenden Ansprüche, **dadurch gekennzeichnet, dass** zwischen der mindestens einen Trennmittelschicht und dem mindestens einem Dekor mindestens eine Primerschicht angeordnet ist.

6. WPC-Platte nach einem der vorhergehenden Ansprüche, **dadurch gekennzeichnet, dass** das mindestens eine Dekor mittels Tiefdruck- und/oder Digitaldruckverfahren aufgebracht wird.

7. WPC-Platte nach einem der vorhergehenden Ansprüche, **dadurch gekennzeichnet, dass** die mindestens eine auf dem Dekor angeordnete Verschleißschutzschicht mindestens eine wärmehärtbare Harzschicht umfasst.

8. WPC-Platte nach einem der vorhergehenden Ansprüche, **dadurch gekennzeichnet, dass** die mindestens eine auf dem Dekor angeordnete Verschleißschutzschicht mindestens eine wärmehärtbare Harzschicht mit abriebfesten Partikeln, natürlichen und/oder synthetischen Fasern umfasst.

9. WPC-Platte nach einem der vorhergehenden Ansprüche, **dadurch gekennzeichnet, dass** auf der dem Dekor gegenüberliegenden Seite der Trägerplatte mindesten ein Gegenzug, insbesondere in Form einer wärmehärtbaren Harzschicht, aufgebracht wird.

10. Verfahren zur Herstellung einer laminierten Holz-Kunststoff-Verbundwerkstoff (WPC) Platte, nach einem der vorhergehenden Ansprüche umfassend die Schritte:
- Herstellen einer Trägerplatte aus einem Holzpartikel-Kunststoff-Gemisch mit mindestens einer auf einer Seite, bevorzugt auf der Oberseite, der Trägerplatte aufgestreuten Schicht aus mindestens einem lösemittelfreien Trennmittel,
- Aufbringen von mindestens einer flüssigen Harzschicht mit einem Feststoffgehalt der wässrigen Kunstharzlösung zwischen 30 und 80% als Grundierungsschicht auf die mit dem Trennmittel versehene Seite der Trägerplatte,
- Aufbringen von mindestens einem Weißgrund als Deckschicht auf die mindestens eine Grundierungsschicht;
- Bedrucken der mindestens einen mit dem Trennmittel versehenen Seite der Trägerplatte im Direktdruck unter Ausbildung eines Dekors, und
- Auftragen von mindestens einer Verschleißschutzschicht auf das Dekor, und
- Verpressen von Trägerplatte, Dekor und Verschleißschutzschicht.

11. Verfahren nach Anspruch 10, **gekennzeichnet durch** die Schritte
- Aufbringen von mindestens einer flüssigen Harzschicht mit einem Feststoffgehalt der wässerigen Kunstharzlösung zwischen 30 und 80% als Grundierungsschicht auf die mit dem Trennmittel versehene Seite der Trägerplatte,
- Aufbringen von von mindestens einem Weißgrund als Deckschicht auf die mindestens eine Grundierungsschicht;
- Aufbringen von mindestens einer Primerschicht auf die mindestens eine Deckschicht;
- Bedrucken der mindestens einen Primerschicht im Direktdruck unter Ausbildung von mindestens einem Dekor; und
- Aufbringen von mindestens einer Verschleißschutzschicht auf das mindestens eine Dekor.

12. Verfahren nach einem der Ansprüche 10 oder 11, **dadurch gekennzeichnet, dass** auf die dem Dekor gegenüberliegende Seite der Trägerplatte mindestens eine Schicht aus einem flüssigen Kunstharz aufgebracht wird.

13. Verfahren nach einem der Ansprüche 10 bis 12, **dadurch gekennzeichnet, dass** der Schritt des Verpresses bei einem Druck zwischen 10 und 100 bar, bevorzugt zwischen 20 und 80 bar, insbesondere bevorzugt zwischen 30 und 50 bar, einer Temperatur zwischen 150 und 250°C, bevorzugt zwischen 160 und 210°C und einer Haltezeit zwischen 5 und 20 Sekunden, bevorzugt zwischen 8 und 15 Sekunden, insbesondere bevorzugt zwischen 10 und 12 Sekunden durchgeführt wird.

14. Verfahren nach einem der Ansprüche 10 bis 13, **dadurch gekennzeichnet, dass** der Schritt des Verpressens in Gegenwart von Pressblechen zur Einführung von Prägestrukturen durchgeführt wird.

## Claims

1. Laminated board of wood-plastic-composite material (WPC),
comprising
- at least one supportive board made of a wood-particle-plastic mixture,
- arranged on one side, preferably on the upper side, of the supportive board, at least one layer made of at least one solvent-free release agent,
- at least one decor applied by the direct printing process, and
- at least one wear-protection layer arranged on the decor,
where, provided between the at least one layer of release agent and the at least one decor, there is at least one basecoat layer, where the at least one basecoat layer is a layer made of a liquid synthetic resin with a solids content of the aqueous synthetic resin solution of from 30 to 80%, and at least one cover layer, where the at least one cover layer takes the form of a white ground.

2. WPC board according to Claim 1, **characterized in that** the at least one solvent-free release agent on the supportive board takes the form of solid, in particular of powder, granulate and/or fibres.

3. WPC board according to any of the preceding claims, **characterized in that** the at least one release agent is selected from a group comprising plant-derived and synthetic solids, in particular wood particles, wood dust, wood flour, wood fibres, abraded dust, bleached cellulose fibres, synthetic fibres and synthetic-resin granulates.

4. WPC board according to any of the preceding claims, **characterized in that** the at least one basecoat layer is a layer made of a liquid synthetic resin with a solids content of the aqueous synthetic resin solution of from 40 to 60%, preferably 55%.

5. WPC board according to any of the preceding claims, **characterized in that**, arranged between the at least one layer of release agent and the at least one decor, there is at least one primer layer.

6. WPC board according to any of the preceding claims, **characterized in that** the at least one decor is applied by means of intaglio printing processes and/or digital printing processes.

7. WPC board according to any of the preceding claims, **characterized in that** the at least one wear-protection layer arranged on the decor comprises at least one heat-curable resin layer.

8. WPC board according to any of the preceding claims, **characterized in that** the at least one wear-protection layer arranged on the decor comprises at least one heat-curable resin layer with abrasion-resistant particles, and/or with natural fibres and/or with synthetic fibres.

9. WPC board according to any of the preceding claims, **characterized in that**, on that side of the supportive board opposite to the decor, at least one counterbalancing layer, in particular in the form of a heat-curable resin layer, is applied.

10. Process for the production of a laminated board of wood-plastic-composite material (WPC) according to any of the preceding claims, comprising the steps of:
- production of a supportive board made of a wood-particle-plastic mixture with, applied by scattering on one side, preferably on the upper side, of the supportive board, at least one layer made of at least one solvent-free release agent,
- application, to that side of the supportive board to which the release agent has been provided, of at least one liquid resin layer with a solids content of the aqueous synthetic resin solution of from 30 to 80%, as basecoat layer,
- application of at least one white ground as cover layer to the at least one basecoat layer;
- formation of a decor by printing, in the direct printing process, of that/those side(s) of the supportive board to which the release agent has been provided, and
- application of at least one wear-protection layer to the decor, and
- pressing of supportive board, decor and wear-protection layer.

11. Process according to Claim 10, **characterized by** the steps of
- application, to that side of the supportive board to which the release agent has been provided, of at least one liquid resin layer with a solids content of the aqueous synthetic resin solution of from 30 to 80%, as basecoat layer,
- application of at least one white ground as cover layer to the at least one basecoat layer;
- application of at least one primer layer to the at least one cover layer;
- formation of at least one decor by printing of the at least one primer layer in the direct printing process; and
- application of at least one wear-protection layer to the at least one decor.

12. Process according to Claim 10 or 11, **characterized in that** at least one layer made of a liquid synthetic resin is applied to that side of the supportive board that is opposite to the decor.

13. Process according to any of Claims 10 to 12, **characterized in that** the pressing step is carried out at a pressure of from 10 to 100 bar, preferably from 20 to 80 bar, with particular preference from 30 to 50 bar, at a temperature of from 150 to 250°C, preferably from 160 to 210°C, and with a residence time of from 5 to 20 seconds, preferably from 8 to 15 seconds, with particular preference from 10 to 12 seconds.

14. Process according to any of Claims 10 to 13, **characterized in that** the pressing step is carried out in the presence of press platens for the introduction of embossment structures.

## Revendications

1. Panneau (WPC) en matériau composite de bois et plastique laminé, comprenant
- au moins un panneau de support composé d'un mélange de particules de bois et de plastique,
- au moins une couche disposée sur un côté, de manière préférée sur le côté supérieur, du panneau de support, composée d'au moins un agent de séparation sans solvant,
- au moins un motif décoratif imprimé lors de l'impression directe, et
- au moins une couche de protection contre l'usure disposée sur le motif décoratif,
dans lequel sont prévues, entre l'au moins une couche d'agent de séparation et l'au moins un motif décoratif, au moins une couche d'apprêt, dans lequel l'au moins une couche d'apprêt est une couche composée d'une résine synthétique liquide avec une teneur en matières solides de la solution de résine synthétique aqueuse entre 30 et 80 %, et au moins une couche de recouvrement, dans lequel l'au moins une couche de recouvrement est présente sous la forme d'un fond blanc.

2. Panneau WPC selon la revendication 1, **caractérisé en ce que** l'au moins un agent de séparation sans solvant est présent sur le panneau de support en tant que matière solide, en particulier en tant que poudre, de granulés et/ou de fibres.

3. Panneau WPC selon l'une quelconque des revendications précédentes, **caractérisé en ce que** l'au moins un agent de séparation est choisi parmi un groupe contenant des matières solides végétales ou synthétiques, en particulier des particules de bois, de la poussière de bois, de la sciure de bois, des fibres de bois, de la poussière de ponçage, des fibres de cellulose blanchies, des fibres plastiques ou des granulés de résine synthétique.

4. Panneau WPC selon l'une quelconque des revendications précédentes, **caractérisé en ce que** l'au moins une couche d'apprêt est une couche composée d'une résine synthétique liquide avec une teneur en matières solides de la solution de résine synthétique aqueuse entre 40 et 60 %, de manière préférée de 55 %.

5. Panneau WPC selon l'une quelconque des revendications précédentes, **caractérisé en ce qu'**au moins une couche de primaire est disposée entre l'au moins une couche d'agent de séparation et l'au moins un motif décoratif.

6. Panneau WPC selon l'une quelconque des revendications précédentes, **caractérisé en ce que** l'au moins un motif décoratif est mis en place au moyen d'un procédé d'héliogravure et/ou d'impression numérique.

7. Panneau WPC selon l'une quelconque des revendications précédentes, **caractérisé en ce que** l'au moins une couche de protection contre l'usure disposée sur le motif décoratif comprend au moins une couche de résine thermodurcissable.

8. Panneau WPC selon l'une quelconque des revendications précédentes, **caractérisé en ce que** l'au moins une couche de protection contre l'usure disposée sur le motif décoratif comprend au moins une couche de résine thermodurcissable avec des particules résistantes à l'abrasion, des fibres naturelles et/ou synthétiques.

9. Panneau WPC selon l'une quelconque des revendications précédentes, **caractérisé en ce qu'**au moins une contre-traction, en particulier sous la forme d'une couche de résine thermodurcissable, est mise en place sur le côté, faisant face au motif décoratif, du panneau de support.

10. Procédé servant à fabriquer un panneau (WPC) en matériau composite de bois et de matière plastique laminé selon l'une quelconque des revendications précédentes, comprenant les étapes :
- de fabrication d'un panneau de support à partir d'un mélange de particules de bois et de matière plastique avec au moins une couche, dispersée sur un côté, de manière préférée sur le côté supérieur, du panneau de support, composée d'au moins un agent de séparation sans solvant,
- de mise en place d'au moins une couche de résine liquide avec une teneur en matières solides de la solution de résine synthétique aqueuse entre 30 et 80 % en tant que couche d'apprêt sur le côté, pourvu de l'agent de séparation, du panneau de support,
- de mise en place d'au moins un fond blanc en tant que couche décorative sur l'au moins une couche d'apprêt ;
- d'impression de l'au moins un côté, pourvu de l'agent de séparation, du panneau de support lors de l'impression directe en formant un motif décoratif, et
- d'application d'au moins une couche de protection contre l'usure sur le motif décoratif, et
- de compression du panneau de support, du motif décoratif et de la couche de protection contre l'usure.

11. Procédé selon la revendication 10,
**caractérisé par** les étapes
- de mise en place d'au moins une couche de résine liquide avec une teneur en matières solides de la solution de résine synthétique aqueuse entre 30 et 80 % en tant que couche d'apprêt sur le côté, pourvu de l'agent de séparation, du panneau de support,
- de mise en place d'au d'au moins un fond blanc en tant que couche de recouvrement sur l'au moins une couche d'apprêt ;
- de mise en place d'au moins une couche de primaire sur l'au moins une couche de recouvrement ;
- d'impression de l'au moins une couche de primaire lors de l'impression directe en formant au moins un motif décoratif ; et
- de mise en place d'au moins une couche de protection contre l'usure sur l'au moins un motif décoratif.

12. Procédé selon l'une quelconque des revendications 10 ou 11, **caractérisé en ce qu'**au moins une couche composée d'une résine synthétique liquide est mise en place sur le côté, opposé au motif décoratif, du panneau de support.

13. Procédé selon l'une quelconque des revendications 10 à 12, **caractérisé en ce que** l'étape de la compression est effectuée à une pression entre 10 et 100 bar, de manière préférée entre 20 et 80 bar, en particulier de manière préférée entre 30 et 50 bar, à une température entre 150 et 250 °C, de manière préférée entre 160 et 210 °C, et avec un temps de séjour entre 5 et 20 secondes, de manière préférée entre 8 et 15 secondes, en particulier de manière préférée entre 10 et 12 secondes.

14. Procédé selon l'une quelconque des revendications 10 à 13, **caractérisé en ce que** l'étape de la compression est effectuée en présence de tôles de pressage servant à introduire des structures d'estampage.
